Europäisches Patentamt

European Patent Office

Office européen des brevets

(11) Veröffentlichungsnummer: **0 212 191 B1**

(19)

(12) # EUROPÄISCHE PATENTSCHRIFT

(45) Veröffentlichungstag der Patentschrift: **11.12.91**

(51) Int. Cl.⁵: **B23K 7/10, B23K 28/00**

(21) Anmeldenummer: **86109218.7**

(22) Anmeldetag: **05.07.86**

(54) **Führungsmaschine für Brenner, insbesondere Plasmaschneidbrenner.**

(30) Priorität: **03.08.85 DE 3527954**

(43) Veröffentlichungstag der Anmeldung:
**04.03.87 Patentblatt 87/10**

(45) Bekanntmachung des Hinweises auf die
Patenterteilung:
**11.12.91 Patentblatt 91/50**

(84) Benannte Vertragsstaaten:
**AT BE CH FR GB IT LI NL SE**

(56) Entgegenhaltungen:
**CH-A- 398 265**
**DE-A- 3 225 673**
**DE-C- 975 060**

**HÜTTE "des Ingenieurs Taschenbuch" 1954,
Seiten 275-280, Verlag von Wilhelm Ernst &
Sohn, Berlin;**

(73) Patentinhaber: **MESSER GRIESHEIM GMBH
Hanauer Landstrasse 330
W-6000 Frankfurt/Main(DE)**

(72) Erfinder: **Klein, Werner
Mühlheimer Strasse 19
W-6000 Frankfurt/Main(DE)**
Erfinder: **Leo, Heinz
Bottigstrasse 14
W-6382 Friedrichsdorf(DE)**

EP 0 212 191 B1

**Beschreibung**

Die Erfindung betrifft eine Brennerführungsmaschine nach dem Oberbegriff des Anspruches 1.

Die vorgegebene Brennerführungsmaschine ist geeignet für Einzel- und Serienfertigungen. Gesteuert werden derartige Brennerführungsmaschinen fotoelektrisch nach Vorlagen oder numerisch mit Lochband. Dabei soll einerseits die Brennerführungsmaschine bei einfacher Programmierung universell einsetzbar sein und andererseits die Nebenzeiten während des in der Regel automatisch ablaufenden Fertigungsprozesses, insbesondere Schweiß- oder Schneidprozesses, auf ein Minimum gesenkt werden.

Aus dem Firmenprospekt "OMNIMAT; SICOMAT", Messer Griesheim GmbH, Nr. 10.6002 ist eine universell einsetzbare Brennerführungsmaschine bekannt, an der ein automatich drehendes Dreibrenneraggregat befestigt ist. Im Drehpunkt dieses Sonderaggregates ist eine als Ringkammersystem ausgebildete Drehdurchführung für das Zuführen der Gase angeordnet. Durch diese Drehdurchführung läßt sich das Sonderaggregat in beiden Richtungen unbegrenzt drehen.

Derartige Drehdurchführungen erfordern aufwendige Gasdichtungen und sind insbesondere nur bei großen Brennerführungsmaschinen wirtschafltich einsetzbar.

In der DE-A1-32 25 673 ist eine Brennerführungsmaschine mit einer Einzelbrenneraufhängung offenbart, der ein Drehantrieb zugeordnet ist. Mit dem Drehantrieb und dem in seiner Winkelstellung verschwenkbaren Brenner können kreisförmige Werkstücke mit schrägem Schnitt hergestellt werden. Hierzu wird die Brenneraufhängung und das Brenneraggregat mit dem Brenner um die Drehachse gedreht. Die Gaszuführleitungen sind an dem Brenner angeschlossen.

Dabei ist es allerdings nötig, die Brenneraufhängung nach der Drehung in entgegengesetzter Richtung zurückzudrehen, um ein Verwinden der Gaszuführleitungen zu verhindern. Dies führt, insbesondere bei automatisch ablaufendem Fertigungsprozeß, zu erhöhtem Programmier- und Fertigungsaufwand. Die dem Fertigungprozeß zurechenbaren Nebenzeiten werden durch das Zurückdrehen des Brenneraggregates vergrößert.

Ferner ist aus der CH-A-398 265 ein Schweißgerät bekannt, bei dem sich im Betrieb ein Schnekkenrad gleichachsig um ein Werkstück dreht, wobei der Brenner eine Taumelbewegung ohne eigene Drehung ausführt. Dabei soll die Anschlußstelle der Leitungen und des Schweißdrahtes an der Zuführungsstelle nicht verdreht werden.

Taumelbewegungen des Brenners führen jedoch zu einer schlechten Qualität der Schweißnaht. Hinzu kommt, daß bei zunehmender Neigung des Brenners eine Verdrehung der Schläuche aufgrund einer Mitnahme des Brenners stattfindet.

Der Erfindung liegt die Aufgabe zugrunde, eine Verwindung der Gaszuführleitungen bei drehender Brenneraufhängung zu verhindern.

Diese Aufgabe wird bei einer gattungsgemäßen Einrichtung durch die kennzeichnenden Merkmale des Anspruches 1 gelöst.

Weiterbildungen der Erfindung sind in den Unteransprüchen angegeben.

Die mit der Erfindung erzielten Vorteile bestehen insbesondere darin, daß durch einfache mechanische Baugruppen das Verwinden der Gaszuführleitungen bei drehender Brenneraufhängung und vorzugsweise gegenüber der Senkrechten schräggestellten Brenner verhindert wird. Der in seiner Winkelstellung verschwenkbare Brenner ist vorzugsweise auf einer Kulisse angeordnet.

Ein Ausführungsbeispiel der Erfindung ist in der Zeichnung dargestellt und wird im folgendem näher beschrieben.

Es zeigen:

Fig. 1    eine schematische Darstellung einer Führungsmaschine, insbesondere Brennschneidmaschine;

Fig. 2    eine schematische Funktionsskizze der unendlich derehbaren Brenneraufhängung nach der Erfindung;

Fig. 3    eine schematische Seitenansicht der unendlich drehbaren Brenneraufhängung in vereinfachter Darstellung.

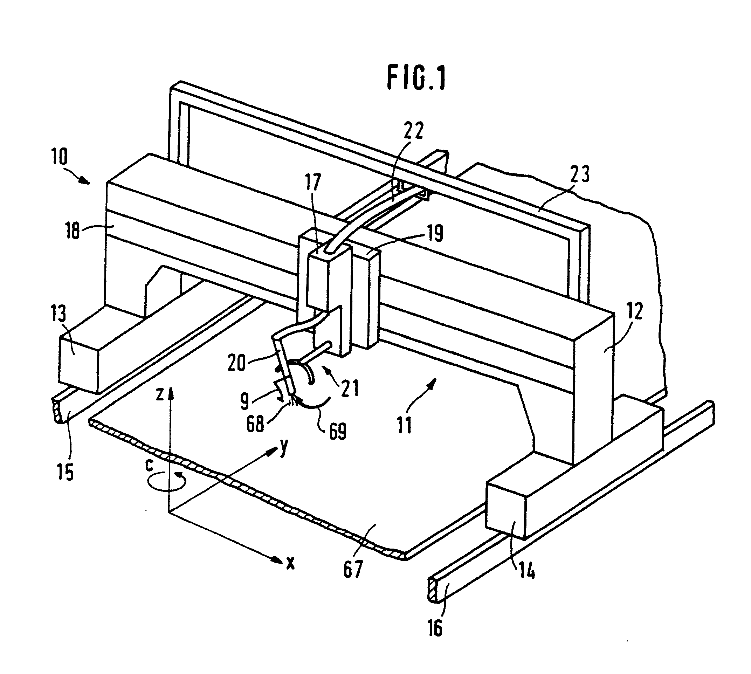

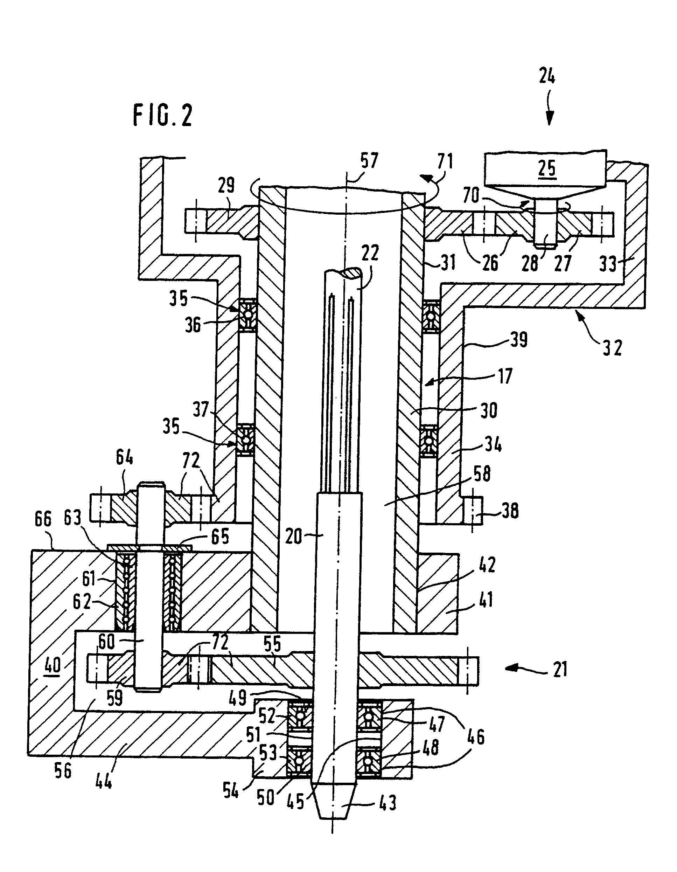

In Fig. 1 ist schematisch eine Brennschneidmaschine 10 dargestellt, die im wesentlichen aus einem Laufwagen 11, der einen Querträger 12, sowie Unterwagen 13 und 14 aufweist, besteht. Im Unterwagen 13 befinden sich die vollständigen Antriebsaggregate für die Längsbewegung (Pfeilrichtung Y). Die Unterwagen 13 und 14 sind auf Laufschienen 15, 16 in Pfeilrichtung Y verfahrbar. Am Querträger 12 ist eine Brenneraufhängung 17 vorgesehen, die beispielsweise mit einem endlos umlaufenden Stahlband 18 in Verbindung steht. Das Stahlband 18 wird über ein im Querantriebswagen 19 angeordnetes Ritzel, das in eine nicht näher dargestellt Zahnstange eingreift, in X-Richtung gezogen. In Fig. 1 ist lediglich eine Brenneraufhängung 17 schematisch dargestellt. Selbstverständlich ist es auch möglich, mehrere Brenneraufhängungen 17 an der Brennschneidmaschine 10 anzuordnen, oder die Brenneraufhängungen 17 an einem motorisch bewegten Querantriebswagen zu befestigen. An der Brenneraufhängung 17 ist jeweils ein Brenneraggregat 21 mit einem in seiner Winkelstellung veränderbaren Brenner 20 angeordnet Vorzugsweise ist der Brenner als Schneidbrenner, insbesondere Plasmaschneidbrenner, ausgebildet, dem ein Höhensensor 9 zugeordnet ist. Das Brennerschlauchpaket mit den Versorgungs- und Steuerleitungen ist mit 22 bezeichnet und wird von einer auf den Unterwagen 13, 14 befestigten Schlauchaufhängung 23 gehalten. Der Brenneraufhängung 17 ist ein in der Fig. 2 näher dargestellter drehantrieb 24 zugeordnet, mit dem die Brenneraufhängung um die Z-Achse (Drehachse C) drehbar ist.

In Fig. 2 ist eine Funktionsskizze der Brenneraufhängung 17 mit dem Brenneraggregat 21 vereinfacht dargestellt. Anhand dieser Funktionsskizze wird im folgenden die Funktionsweise der unendlich drehbaren Brenneraufhängung 17 näher erläutert.

Wie aus Fig. 2 ersichtlich, ist der Brenneraufhängung ein Drehantrieb 24 zugeordnet, der im wesentlichen aus einem Motor 25, welcher über ein Getriebe 26 mit der Brenneraufhängung 17 verbunden ist, besteht. Das Getriebe weist ein mit der Motorwelle 28 verbundenes Antriebsritzel 27 auf, das mit einem an der Brenneraufhängung 17 fest angeordneten Zahnrad 29 kämmt. Das Zahnrad 29 ist vorzugsweise an der Außenwandung 31 der als rohrförmige Halterung 30 ausgebildeten Brenneraufhängung 17 befestigt. Die rohrförmige Halterung 30 ist von einem fest mit der Brennschneidmaschine 10, insbesondere dem Querantriebswagen 19 verbundenen Gehäuse 32 umgeben, das aus einem das Getriebe 26 und den Motor 25 umgebenden Gehäuseschutzteil 33 und einem gegenüber der rohrförmigen Halterung 30 durchmessergrößeren Gehäuselagerteil 34 besteht. In dem Gehäuselagerteil 34 ist eine Lagerung 35 , vorzugsweise zwei Wälzlager 36, 37, angeordnet, die mit der Außenwandung 31 der rohrförmigen Halterung 30 in Wirkverbindung stehen.

An dem zum Brenner 20 weisenden Ende des feststehenden Gehäuses 32 ist das Gehäuselagerteil 34 als Zahnrad 38 ausgebildet. Selbstverständlich ist es auch möglich, das Zahnrad 38 als Einzelbauteil auszubilden und mittels Befestigungselementen, wie Schrauben oder Paßfedern oder Schweißverbindungen an der Außenwand 39 des Gehäuses 32 zu befestigen.

An der Brenneraufhängung 17 ist das Brenneraggregat 21 befestigt. In der vereinfachten Funktionsdarstellung, in der der Brenner 20 in seiner Winkelstellung nicht veränderbar ist, besteht das Brenneraggregat aus einem bügelförmigen Halter 40, dessen oberer, der Brenneraufhängung 17 zugeordneter Arm 41 eine Befestigungsbohrung 42 aufweist, mit der der bügelförmige Halter 40 an der rohrförmigen Halterung 30 befestigt ist. Der untere, zur Brennerdüse 43 gerichtete Arm 44 des Halters 40 weist eine Brennerlagerbohrung 45 auf, in der eine Lagerung 46, vorzugsweise zwei Wälzlager 47, 48 angeordnet sind. Die Innenringe 49, 50 der Wälzlager 47, 48 sind mit dem Brenner 20, insbesondere der Brenneraußenwandung 51 und die Außenringe 52, 53 der Wälzlager 47, 48 mit dem Brennerhalter 54 verbunden. An dem in der Lagerung 46 gelagerten Brenner 20 ist ein Zahnrad 55 in der Öffnung 56 zwischen den beiden Horizontalarmen 41, 44 des Halters 40 befestigt.

Das Gehäuselagerteil 34, die rohrförmig ausgebildete Halterung 30 der Brenneraufhängung 17, die Befestigungsbohrung 42 und die Brennerlagerbohrung 45 sind um eine gemeinsame Mittelachse 57, die die Brennermittelachse ist, angeordnet. Die Brennerversogungs- und Steuerleitungen sind vorzugsweise zu einem Schlauchpaket 22 zusammengefaßt, das von einem Wellschlauch umgeben ist und welches mittels eines nicht näher dargestellten Klemmrings abhängig von der Brennerwinkeleinstellung nach oben oder nach unten gezogen werden kann. Das Schlauchpaket 22 wird durch die Innenöffnung 58 der rohrförmige Haltering 30 und somit durch die Mittelachse 57 zu der Schlauchaufhängung 23 (Fig. 1) geführt.

Das mit der Außenwandung 51 des Brenners 20 fest verbundene Zahnrad 55 kämmt mit einem Planetenrad 59, das auf einer Welle 60 angeordnet ist, die in dem seitlich auskragenden horizontalen Arm 41 des bügelförmigen Halters 40 gelagert ist. Zur Lagerung der Welle 60 ist in dem Arm 41 eine Lagerbohrung 61 vorgesehen, in der eine Kugelbüchse angeordnet ist, deren Innenring 63 mit dem Außendurchmesser der Welle 60 verbunden ist. Selbstverständlich ist es auch möglich, anstatt der Kugelbüchse zwei Wälzlager bzw. ein Gleitlager zur Lagerung der Welle 60 zu verwenden.

Die Welle 60 erstreckt sich über die Kugelbüchse 62 in Richtung des Gehäuselagerteils 34. An diesem, dem Gehäuselagerteil 34 zugeordneten Ende der Welle 60 ist ein weiteres Plantenrad 64 mit gleicher übersetzung befestigt, das mit dem am Gehäuselagerteil 34 fest angeordneten Zahnrad 38 kämmt. An der Welle 60 ist ein Haltering 65 angeordnet, der auf der Oberseite 66 des Horizontalarmes 41 aufliegt und somit eine Vertikalbewegung der Welle 60 verhindert.

Es ist selbstverständlich und bedarf daher keiner näheren Erläuterung, daß alle Lagerungen unabhängig von der Ausbildung der Lager als Gleitoder Wälzlager entsprechend den im Maschinenbau üblichen Richtlinien eingebaut und mit Lagerdichtungen versehen sind. Die Art des Schmiermittels richtet sich dabei u. a. nach der Ausbildung als Wälz- oder Gleitlager.

Die anhand der Fig. 2 vorstehend beschriebene erfindungsgemäße Einrichtung zum vorzugsweise Schneiden von Werkstücken 67 mittels eines Schneidstrahles 68 abreitet wie folgt:

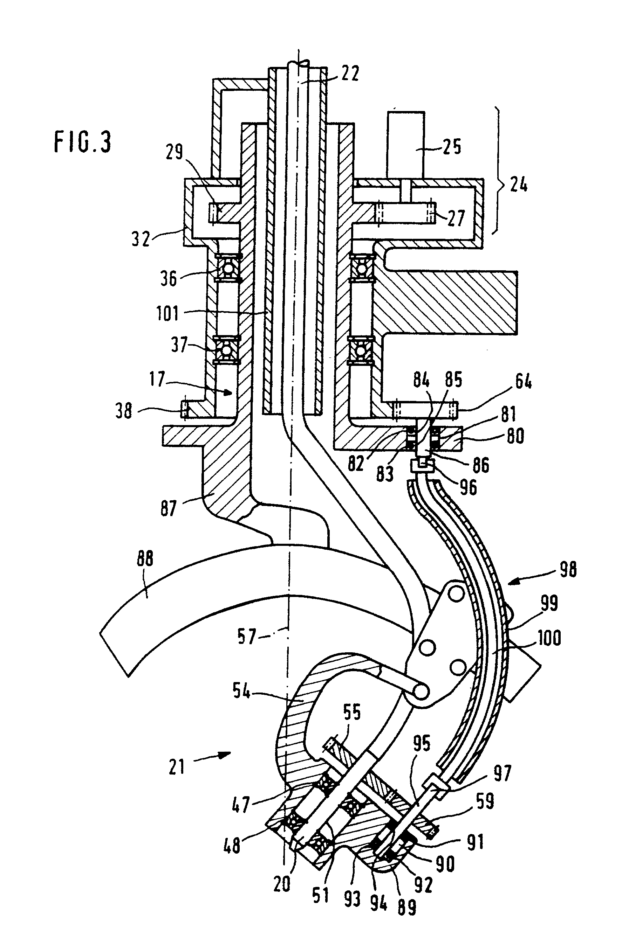

Zunächst werden die in den einzelnen Versorgungsleitungen angeordneten Steuerventile für die Schneidgase geöffnet. Die aus der Brennerdüse 43 austretenden brennbaren Gase werden vorzugsweise mittels einer elektrischen Zündung gezündet, so daß der Schneidstrahl 68 entsteht. Der Anschnitt des Werkstückes 67 kann dabei wahlweise an der Werkstückkante oder mittels Lochstechverfahren auf dem Werkstück 68 erfolgen. Um insbesondere kreisförmige Konturen 69 bzw. mit Kreisabschnitten und/oder Rundungen versehene Formschnitte auszuführen, wird der Motor 25 des Drehantriebs 24 eingeschaltet so daß das Antriebsritzel 27 in die angenommene Pfeilrichtung 70 dreht. Dies hat zur Folge, daß die rohrförmige Halterung 30 der Brenneraufhängung 17 über das mit dem Antriebsritzel 27 kämmende Zahnrad 29 entgegengesetzt zur Pfeilrichtung 70 in Pfeilrichtung 71 um die Mittelachse 57 gedreht wird. Bei der Drehung wird die in dem bügelförmigen Halter 40 gelagerte Welle 60 in Pfeilrichtung 71 mitgenommen. Die Planetenräder 59 und 64, die an der umlaufenden Welle 60 gelagert sind, umlaufen die ihnen zugeordneten Zahnräder 38 bzw. 55 und bilden somit über die in Eingriff stehenden Zähne eine Brennermitnahmeverriegelung 72. Der Brenner 20 wird beim Drehvorgang der Brenneraufhängung 17 in Pfeilrichtung 71 durch das Brenneraufhängungsplanetengetriebe 64, 38 und das Brennerplanetengetriebe 55, 59, die beide entgegengesetzt zur Drehrichtung 71 wirken, gegenüber der Drehbewegung der Brenneraufhängung 17 stillgesetzt. Eine Mitnahme des Brenners 20 durch den Drehantrieb 24 und somit eine Verdrehung des Schlauchpaketes 22 wird sicher verhindert. Dies ist insbesondere dann erforderlich, wenn, wie in der Fig. 3 näher dargestellt, der Brenner gegenüber der senkrechten Mittelachse 57 schräggestellt ist.

In der Fig. 3 ist eine Prinzipskizze für die Brenneraufhängung 17 und das Brenneraggregat 21 mit in seiner Winkelstellung verschwenkbaren Brenner 20 dargestellt.

In der Fig. 3 wurden für die vorstehend beschriebenen gleichen Bauteile die gleichen Bezugsziffern verwendet.

Die Brenneraufhängung 17 ist in ihrem unteren, zum Brenner weisenden Bereich als Planetenträger 80 ausgebildet. Der Planetenträger 80 besteht aus einer Lagerbohrung 81, in der zwei Wälzlager 82, 83 angeordnet sind, deren Innenringe 84, 85 mit einer das Planetenrad 64 tragenden Welle 86 in Verbindung stehen. Das Planetenrad 64, kämmt, wie bereits in der Fig. 2 beschrieben, mit dem fest angeordneten Zahnrad 38. Brenneraufhängung 17 ist über eine Kulissenbefestigung 87 eine Kulisse 88 befestigt, die aus einem kreisförmigen Segment besteht. Auf der Kulisse 88 ist das in seiner Winkelstellung verschwenkbare Brenneraggregat 21 angeordnet. Das Brenneraggregat 21 besteht im wesentlichen aus dem Brennerhalter 54, in dem der Brenner 20 mit dem fest an der Brenneraußenwandung 51 angeordneten Zahnrad 55 in Wälzlagern 47, 48 gelagert ist. Der Brennerhalter 54 ist ebenfalls als Planetenträger 89 ausgebildet. Der Planetenträger 89 besteht aus einer Lagerbohrung 90, in der vorzugsweise zwei Wälzlager 91, 92 angeordnet sind. Die Innenringe 93, 94 der Wälzlager 91, 92 stehen mit einer das Planetenrad 59 tragenden Welle 95 in Verbindung. Wie bereits in der Fig. 2 dargestellt, kämmt das Planetenrad 59 mit dem am Brenner fest angeordneten Zahnrad 55. Die Wellen 86 und 95 weisen an ihren zueinander gerichteten Enden Anschlußelemente 96, 97 auf, an die das jeweilige Ende einer biegsamen Welle 98 angeschlossen ist. Die biegsame Welle 98 besteht im wesentlichen aus einem flexiblen Schutzschlauch 99, in dem eine die Drehbewegung des Planetenrades 64 auf das Planetenrad 59 übertragende biegsame Welle 100 angeordnet ist. Das Brenneraufhängungsplanetengetriebe 38, 64 und das Brennerplanetengetriebe 59, 55 haben die gleiche Übersetzung.

Wird der Drehantrieb 25 eingeschaltet, dreht sich die Brenneraufhängung 17 entgegengesetzt zur Drehrichtung des Antriebsritzels 27. Dies hat zur Folge, daß das Planetenrad 64 um das feststehende Zahnrad 38 umläuft und diese Umlaufbewegung über die biegsame Welle 98 auf das Planetenrad 59 übertragen wird. Das Planetenrad 59 umläuft somit ebenfalls das am Brenner fest angeordnete Zahnrad 55. Die Umlaufrichtung der Planentenräder 64 und 59 ist hierbei entgegengesetzt zur Drehrichtung der Brenneraufhängung 17. Dies hat zur Folge, daß durch die in Eingriff stehenden Zähne der Planetenräder 64, 59 mit den Zahnrädern 38, 55 der Brenner 20 verriegelt wird und gegenüber der Drehbewegung stillsteht. Eine Drehbewegung des Brenners aufgrund der steifen Ausbildung des Brennerschlauchpaketes 22 und somit eine Verwindung des Brennerschlauchpaketes wird sicher verhindert.

Vorzugsweise ist innerhalb der Brenneraufhängung 17 ein feststehendes Schutzrohr 101 angeordnet, durch daß das Brennerschlauchpaket 22 hindurchgeführt wird.

**Patentansprüche**

1. Brennerführungsmaschine mit einer Brenneraufhängung (17), an der die gegenüber der Senkrechten neigungseinstellbar gelagerten Brenner (20), insbesondere Plasmaschneidbrenner, angeordnet sind und welche mit einem Drehantrieb (24) gegenüber dem Brenner (20) drehbar ist,
dadurch gekennzeichnet,
daß die Brenneraufhängung (17) als Hohlkörper, vorzugsweise Rohr, ausgebildet ist, durch dessen Drehachse (57) das Brennerschlauchpaket geführt ist und eine Kulisse (88) mit in seiner Winkelstellung veränderbaren Brennhalter (54) aufweist, welcher als Planetenträger (89, 91, 92, 95) ausgebildet ist, wobei ein Brenneraufhängungsplanetengetriebe (38, 64) und ein Brennerplanetengetriebe (55, 59) mit gleicher Übersetzung vorgesehen sind, die über eine biegsame Welle (98) verbunden und deren Planetenräder (59, 64) mittels des Drehantriebes (24) der Brenneraufhängung (17) entgegengesetzt zur Drehrichtung (71) derselben angetrieben sind.

2. Brennerführungsmaschine nach Anspruch 1,
dadurch gekennzeichnet,
daß die Brenneraufhängung als Planetenträger (80, 81, 82, 83, 86) ausgebildet ist, in den ein Planetenrad (64) gelagert ist.

3. Brennerführungsmaschine nach Anspruch 1 oder 2,
dadurch gekennzeichnet,
daß die Brenneraufhängung (17) von einem ortsfesten Gehäuse (32) mit Zahnrad (38) umgeben ist und das ortsfeste Zahnrad (38) mit dem Planetenrad (64) kämmt.

4. Brennerführungsmaschine nach einem der Ansprüche 1 bis 3,
dadurch gekennzeichnet,
daß in dem Brennerhalter (54) ein Brenner (20) mit Zahnrad (55) gelagert ist und das Zahnrad (55) mit dem Planetenrad (59) kämmt.

5. Brennerführungsmaschine nach einem der Ansprüche 1 bis 4,
dadurch gekennzeichnet,
daß in dem Brennerhalter (54) zwei Wälzlager (47, 48) angeordnet sind, deren Außenringe (52, 53) mit dem Brennerhalter und deren Innenringe (49, 50) mit dem Brenner (20) verbunden sind.

6. Brennerführungsmaschine nach einem der Ansprüche 1 bis 5,
dadurch gekennzeichnet,
daß die Führungsmaschine eine NC-Brennschneidmaschine ist.

## Claims

1. Torch-guiding machine having a torch attachment (17) on which the torches (20), in particular plasma-cutting torches, adjustable in inclination relative to the perpendicular, are arranged and which can be rotated relative to the torch (20) by a rotary drive (24), characterised in that the torch attachment (17) is designed as a hollow body, preferably a tube, along the rotational axis (57) of which the torch hose assembly is guided, and has a connecting link (88) having a torch holder (54) which can be varied in its angular position and is designed as a planet carrier (89, 91, 92, 95), in which arrangement a torch-attachment planetary gearing system (38, 64) and a torch planetary gearing system (55, 59) having the same transmission ratio are provided which are connected via a flexible shaft (98) and whose planet gears (59, 64), by means of the rotary drive (24) of the torch attachment (17), are driven in the opposite direction (71) of rotation of the same.

2. Torch-guiding machine according to Claim 1, characterised in that the torch attachment is designed as a planet carrier (80, 81, 82, 83, 86) in which a planet gear (64) is mounted.

3. Torch-guiding machine according to Claim 1 or 2, characterised in that the torch attachment (17) is surrounded by a fixed housing (32) having a gear (38) and the fixed gear (38) meshes with the planet gear (64).

4. Torch-guiding machine according to one of Claims 1 to 3, characterised in that a torch (20) having a gear (55) is mounted in the torch holder (54) and the gear (55) meshes with the planet gear (59).

5. Torch-guiding machine according to one of Claims 1 to 4, characterised in that arranged in the torch holder (54) are two rolling-contact bearings (47, 48) whose outer rings (52, 53) are connected to the torch holder and whose inner rings (49, 50) are connected to the torch (20).

6. Torch-guiding machine according to one of Claims 1 to 5, characterised in that the guiding machine is an NC flame-cutting machine.

## Revendications

1. Machine de guidage pour des chalumeaux avec une suspension de chalumeaux (17) sur laquelle sont disposés, en étant susceptible d'être montés de façon à pouvoir être réglés en inclinaison par rapport à la verticale, des chalumeaux (20), notamment des chalumeaux coupeurs à plasma, et cette suspension est susceptible de tourner par rapport au chalumeau (20) grâce à un entraînement à rotation (24), machine de guidage pour chalumeaux caractérisée en ce que la suspension (17) est réalisée sous la forme d'un corps creux, de préférence un tube, à travers l'axe de rotation (57) duquel est guidé le paquet de tuyaux souples du chalumeau, et cette suspension comporte une coulisse (88) avec un support de chalumeaux (54) dont la position angulaire peut être modifiée, et qui est réalisé sous la forme d'un support planétaire (89, 91, 92, 95), tandis qu'il est prévu un mécanisme planétaire de suspension de chalumeau (38, 64) et un mécanisme planétaire de chalumeau (55, 59) avec la même surmultiplication, qui sont reliés par l'intermédiaire d'un arbre flexible (98), et dont les roues planétaires (59, 64) sont entraînées au moyen de l'entraînement en rotation (24) de la suspension (17) du chalumeau, en sens inverse du sens de rotation (71) de cette suspension.

2. Machine de guidage pour chalumeaux selon la revendication 1, caractérisée en ce que la suspension du chalumeau est réalisée sous la forme d'un support planétaire (80, 81, 82, 83, 86) sur lequel est montée une roue planétaire (64).

3. Machine de guidage pour chalumeaux selon la revendication 1 ou la revendication 2, caractérisée en ce que la suspension du chalumeau (17) est entourée d'un carter fixe (32) avec une roue dentée (38) et cette roue dentée à poste fixe (38) engrène avec la roue planétaire (64).

4. Machine de guidage pour chalumeaux selon une des revendications 1 à 3, caractérisée en ce que sur le support de chalumeaux (54) est monté un chalumeau (20) avec une roue dentée (55) et cette roue dentée (55) engrène avec la roue planétaire (59).

5. Machine de guidage pour chalumeaux selon une des revendications 1 à 4, caractérisée sur le support de chalumeaux (54) sont disposés deux paliers à billes (47, 48) dont les bagues externes (52, 53) sont reliées au support de chalumeaux et dont les bagues internes (49, 50) sont reliées au chalumeau (20).

6. Machine de guidage pour chalumeaux selon une des revendications 1 à 5, caractérisée en ce que cette machine de guidage est une machine d'oxycoupage à commande numérique.

# FIG.1

# FIG.2

FIG.3